# EUROPÄISCHE PATENTSCHRIFT

(11) **EP 1 349 300 B1**
(45) Veröffentlichungstag und Bekanntmachung des Hinweises auf die Patenterteilung: **08.03.2006**
(21) Anmeldenummer: 02290811.5
(22) Anmeldetag: 29.03.2002
(51) Int. Cl.: H04B 10/18, H04B 10/158

(54) **Empfangseinrichtung für gestörte optische Signale mit Erzeugung eines Rückkopplungssignals durch Korrelation, und Verfahren zum Erzeugen eines solchen Rückkopplungssignals**
Receiving device for distorted optical signals based on a feedback signal generated by correlation and method of generatiing such a feedback signal
Dispositif de réception pour des signaux distordus au moyen d'un retrosignal généré par corrélation et une méthode de génération d' un tel signal

(30) Priorität: 28.03.2002 EP 02360112
(43) Veröffentlichungstag der Anmeldung: 01.10.2003
(73) Patentinhaber: ALCATEL, 75008 Paris (FR)
(72) Erfinder: Buchali, Fred, 71336 Waiblingen (DE)
(74) Vertreter: Rausch, Gabriele

(56) Entgegenhaltungen:
- WO-A-01/84748
- WO-A-01/93465

## Beschreibung

Die Erfindung betrifft eine Empfangseinrichtung für ein optisches Signal, das durch Störungen beeinträchtigt ist, wobei die Empfangseinrichtung eine adaptive Filtereinrichtung aufweist, die dazu dient, Störungen des optischen Signals mindestens teilweise zu kompensieren, und die durch ein Rückkopplungssignal gesteuert wird.

Die Übertragung optischer Signale über optische Wellenleiter unterliegt zahlreichen störenden Einflüssen, weshalb das gestörte optische Signal vor einer Detektion oder anderen Weiterverarbeitung durch eine adaptive Filtereinrichtung regeneriert wird. Die Signalübertragung mittels optischer Signale kann beispielsweise mittels Dichte-Wellenlängen-Multiplex (DWDM) erfolgen, kann in lokalen Netzwerken (LAN) stattfinden, und Störungen können durch Polarisations-Moden-Dispersion (PMD), chromatische Dispersion (GVD, Group Velocity Dispersion) und Nichtlinearitäten erfolgen. Bei der letztgenannten Störung ändert sich die Phasenlage der Impulse bei der Übertragung. Zur Steuerung der oben genannten adaptiven Filtereinrichtungen sind Rückkopplungssignale erforderlich, die empfangsseitig gewonnen werden. Es ist bereits bekannt, optische Rückkopplungssignale zu erzeugen, zum Beispiel Degree-of-Polarisation (DOP) Signale, oder elektrische Korrektursignale (Bit-Error-Ratio). Die bekannten adaptiven Filtereinrichtungen und Filterverfahren genügen jedoch nicht allen Ansprüchen, insbesondere, wenn es auf hohe Bit-Übertragungsraten ankommt. Dies gilt auch für Verfahren zum Generieren von Rückkopplungssignalen.

Die Durckschrift WO-A-01/93465 beschreibt eine Vorrichtung und ein Verfahren zur Kompensation von Polarisationsmodendispersion (PMD) eines Optischen Signals.

Die Erfindung schafft eine neuartige Erzeugung der Rückkopplungssignale. Die Erfindung ist dadurch gekennzeichnet, dass das Rückkopplungssignal durch Korrelieren des optischen Signals mit einem weiteren Signal erzeugt wird, das bezüglich des optischen Signals so ausgebildet ist, dass bei Nichtvorhandensein von Störungen des optischen Signals eine im Vergleich zur maximal möglichen Korrelation beider Signale kleinere Korrelation vorhanden ist, wobei zum Korrelieren das optische Signal mit dem weiteren Signal in einem analogen Multiplizierer multipliziert und dessen Ausgangssignal einer Integrationseinrichtung zugeführt wird.

Vorzugsweise ist bei Nichtvorhandensein von Störungen des optischen Signals die vorhandene Korrelation höchstens im Bereich von 50 % der maximal möglichen Korrelation beider Signale.

Weiter bevorzugt ist, dass bei Nichtvorhandensein von Störungen des optischen Signals höchstens eine geringfügige Korrelation vorhanden ist.

Die beiden zuletzt genannten Ausführungsformen bieten Vorteile bezüglich der Regelungsfähigkeit, da sich die Regelung nicht in nächster Nähe der maximal möglichen Korrelation oder der Korrelation mit dem Korrelationsfaktor Null, also in Gebieten kleiner Regelsteilheit, abspielt.

Der Erfindung liegt folgende Erkenntnis zugrunde: wird ein nicht gestörtes optisches Signal, das im allgemeinen stets als eine Folge von Signal-Bits auftreten wird, mit einem weiteren Signal korreliert, das mit dem genannten optischen Signal keinerlei Korrelation aufweist, so ergibt die Korrelation der beiden Signale den Korrelationsfaktor Null. Ein derartiges nicht korreliertes Signal kann beispielsweise in der exakten Kopie des nicht gestörten optischen Signals bestehen, die gegenüber diesem jedoch um etwa einen halben Bit-Abstand (bei RZ-Signalen, Return-to-Zero) bzw. etwa einen ganzen Bit-Abstand (bei NRZ-Signalen, No-Return-to-Zero) verschoben ist, also immer dann den logischen Wert Null haben muss, wenn das nicht gestörte optische Signal je nach Informationsgehalt einen logischen Pegel 1 (oder vielleicht auch 0) haben kann, und immer dann, wenn das ungestörte optische Signal (in einer Pause zwischen aufeinander folgenden Bits) den Pegel Null aufweist, kann das genannte verschobene weitere Signal eine von Null abweichenden Pegel aufweisen. In jedem Augenblick ergibt die analoge Multiplikation der augenblicklichen Signalamplitude der beiden Signale den Wert Null, also integriert über eine gewisse Zeit ebenfalls den Korrelationsfaktor Null.

Treten nun bei dem ursprünglichen optischen Signal Verzerrungen auf, so führt dies zu einer Abweichung der exakten Impulsform in Richtung auf eine Verbreiterung der Impulsform hin, so dass bei der Ermittlung der Korrelation ein von Null verschiedener Wert auftritt. Dieser Korrelationsfaktor kann erfindungsgemäß als Rückkopplungssignal verwendet werden.

Da durch das Rückkopplungssignal die ursprüngliche ungestörte Signalform des optischen Signals so gut wie möglich wiederhergestellt werden soll (was im oben genannten Beispiel zu einem Korrelationsfaktor Null führen würde), wird vorzugsweise so vorgegangen, dass auch bei hinreichend idealem ursprünglichem optischen Signal durch die Korrelation bereits ein von Null deutlich verschiedener Korrelationsfaktor ermittelt wird. Dieser Korrelationsfaktor kann dann bei einer Regelung in Richtung einer Verkleinerung des Korrelationsfaktors nicht bis auf Null absinken, so dass die Regelungsfähigkeit der Empfangseinrichtung beziehungsweise des Verfahrens stets aufrechterhalten bleibt.

Eine Regelung in dem Sinne, dass eine Vergrößerung der Korrelation auftritt, würde im allgemeinen dazu führen, dass das empfangene bereits gestörte optische Signal künstlich noch stärker gestört wird. Dennoch kann der Fall auftreten, dass eine derartige Regelung auf eine Maximierung der Korrelation vorteilhaft ist.

Statt des oben genannten um eine halbe Bit-Breite bzw. ganze Bit-Breite verschobenen empfangenen Signals als weiteres Signal, das mit dem (nicht verschobenen) empfangenen optischen Signal durch Korrelationsberechnung verglichen wird, kann auch ein empfangsseitig vorhandenes oder dort künstlich erzeugtes Signal verwendet werden, das so konstruiert ist, dass es mit dem empfangenen Signal nicht korreliert ist. Als ein solches weiteres Signal kann beispielsweise ein auf dem Empfangsweg der Empfangseinrichtung zugeführtes anderes optisches Signal, dessen Signalinhalt mit dem zu korrigierenden (zu entzerrenden) optischen Signal keine Gemeinsamkeiten hat, und daher mit diesem nicht korreliert ist, verwendet werden (weiterer Nachrichtenkanal des WDM-Systems). Im einen oder anderen Fall mag es sein, dass ein derartiges anderes optisches Signal noch geringfügige Korrelation mit dem zu entzerrenden Signal aufweist, beispielsweise weil beide Signale hinsichtlich der Struktur verwendeter Rahmen übereinstimmen. Aus den obigen Ausführungen ergibt sich, dass eine derartige noch festgestellte geringfügige Korrelation für die Ausführung des Verfahrens durchaus nützlich sein kann, weil keine perfekte Regelung auf den Korrelationsfaktor Null erfolgen kann.

Optische Signale sind im Allgemeinen recht breitbandig. Die oben genannte zeitliche Verschiebung um etwa einen halben (bzw. um etwa einen ganzen) Bitabstand führt dazu, dass eine Änderung der Impulsbreite im hochfrequenten Teil des Spektrums bei der Berechnung der Korrelation sich auswirkt. Wird demgegenüber beabsichtigt, bei niedrigeren Frequenzen des Spektrums der optischen Signale eine Änderung der Impulsbreiten für die Korrelation auszunutzen, so kann dies dadurch erfolgen, dass statt einer Verzögerung um etwa eine halbe Bitbreite bei RZ-Signalen Verzögerungen um etwa drei halbe Bitbreiten, fünf halbe Bitbreiten, sieben halbe Bitbreiten und so fort verwendet werden, und bei NRZ-Signalen Verzögerungen um etwa zwei, drei, vier Bitbreiten und so fort verwendet werden. Dies führt zu immer niedrigeren Frequenzen im Spektrum, bei denen die Korrelation berechnet wird.

Die Erfindung betrifft auch ein Verfahren zum Erzeugen eines Rückkopplungssignals für eine adaptive Filterung, die empfangsseitig ein optisches Signal regeneriert, wobei dieses Verfahren die oben bereits erläuterten Schritte umfasst.

Die Erfindung betrifft auch ein Verfahren zum Erzeugen eines Rückkopplungssignals, das zum Steuern einer adaptiven Filtereinrichtung zwecks Kompensation von Störungen eines optischen Signals geeignet ist. Erfindungsgemäß umfasst das Verfahren die oben bereits erläuterten Schritte und ist dadurch gekennzeichnet, dass das Rückkopplungssignal durch Korrelieren des optischen Signals mit einem weiteren Signal erzeugt wird, das bezüglich des optischen Signals so ausgebildet ist, dass bei Nichtvorhandensein von Störungen des optischen Signals eine im Vergleich zur maximal möglichen Korrelation beider Signale kleinere Korrelation vorhanden ist, wobei zum Korrelieren das optische Signal mit dem weiteren Signal analog multipliziert und über das so erhaltene Signal integriert wird. Dies gilt insbesondere für eine solche hier als "maximal mögliche" bezeichnete Korrelation, die durch geeignete Anpassung der Phasenlage der beiden Signale erreichbar ist. Vorzugsweise ist dabei eine Korrelation von maximal etwa 50 % der maximal möglichen Korrelation vorhanden. Dies kann Vorteile bezüglich der Regelungsfähigkeit bieten.

Die Erfindung betrifft ein Verfahren, wobei das Rückkopplungssignal durch Korrelieren des optischen Signals mit einem weiteren Signal erzeugt wird, das bezüglich des optischen Signals so ausgebildet ist, dass bei Nichtvorhandensein von Störungen des optischen Signals höchstens eine geringfügige Korrelation vorhanden ist. Auch dies kann bezüglich der Regelungsfähigkeit vorteilhaft sein.

Vorteile der Erfindung liegen darin, dass zur Erzeugung des Rückkopplungssignal durch Berechnung der Korrelation keine Entscheidungen dahingehend, ob jeweils ein Wert Eins oder Null vorhanden ist, getroffen werden müssen, sondern die Korrelation kann rein analog berechnet werden, so dass auch bei einer sehr hohen Bit-Folgefrequenz, insbesondere höher als 10 Gbit/s übliche preisgünstige analoge Multiplikatoren verwendet werden können. Eine Taktrückgewinnung oder eine Schwellenwertentscheidung zwecks Erzeugung des Rückkopplungssignals sind nicht erforderlich.

Weitere Merkmale und Vorteile der Erfindung ergeben sich aus der folgenden Beschreibung von Ausführungsbeispielen der Erfindung anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein.
Fig. 1 zeigt ein Funktionsschema,
Fig. 2 zeigt schematisch eine Empfangseinrichtung für ein optisches Signal mit einer adaptiven Filtereinrichtung zwecks Rückgewinnung des optischen Signals aus dem gestörten Signal, wobei das Rückkopplungssignal mit Hilfe einer Korrelationsberechnungseinrichtung erzeugt wird.

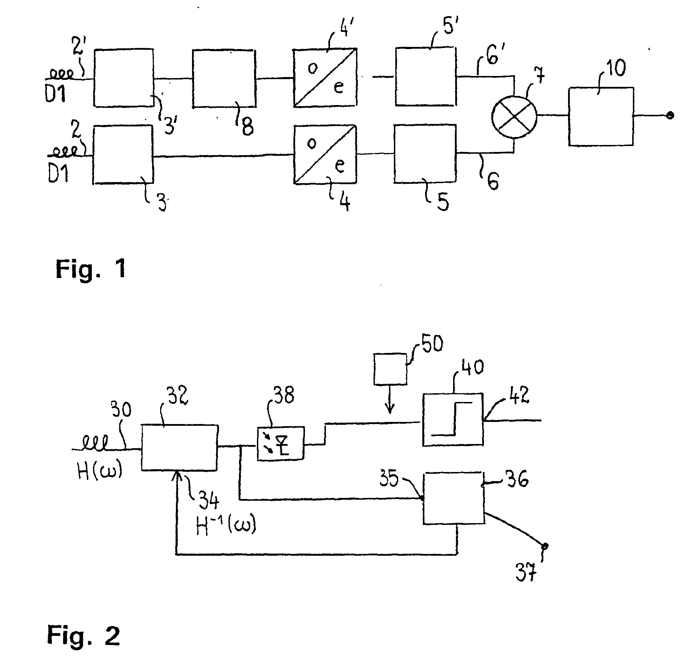

Figur 1 zeigt ein Funktionsschema für die Bildung des Rückkopplungssignals, das zunächst anhand der Ermittlung der Korrelation mittels einer zeitlich verschobenen Kopie des empfangenen optischen Signals erfolgt. In einem unteren Zweig der Anordnung gelangt ein gestörtes optisches Signal D1 auf einem optischen Weg 2 über eine geeignete optische Filtereinrichtung 3 zu einem opto-elektrischen Wandler 4 und von dessen Ausgang über eine elektrische Filtereinrichtung 5 über einen Weg 6 zu einem Eingang eines analogen Multiplizierers 7. Die gestörten optischen Daten D1 gelangen im oberen Zweig der Anordnung der Figur 1 auf einem optischen Weg 2' zum Eingang einer optischen Filtereinrichtung 3', von deren Ausgang über eine optische Verzögerungseinrichtung (praktisch eine bestimmte Länge eines optischen Lichtwellenleiters) 8 zum Eingang eines weiteren opto-elektrischen Wandlers 4', von diesem zu einer weiteren elektrischen Filtereinrichtung 5' und von deren Ausgang über einen weiteren Weg 6' zu einem weiteren Eingang des analogen Multiplizierers 7. Das jeweilige Ausgangssignal des analogen Multiplizierers 7 (das heißt, das Produkt der beiden Eingangssignale) wird einer Integrationseinrichtung 10 zugeführt, an deren Ausgang eine Gleichspannung auftritt, die ein Maß für den Korrelationsfaktor ist.

Die Verzögerungseinrichtung 3 gestattet es, eine geeignete zeitliche Verzögerung einzustellen, die insbesondere im Bereich der zeitlichen Länge eines Bits des optischen Signals liegt.

Bei einer anderen Ausführungsform der Erfindung ist statt einer Kopie des gestörten optischen Signals D1, das dem oberen Zweig der Figur 1 zugeführt wird, ein mit dem zu empfangenden und zu entzerrenden optischen Signal in keinerlei Zusammenhang stehendes optisches Signal D2 (in Figur 1 nicht eingezeichnet) vorgesehen.

Figur 2 zeigt ein Blockschaltbild eines optischen Übertragungssystems, bei dem empfangsseitig eine adaptive Filterung für eine Entzerrung vorgenommen wird, wobei die adaptive Filterung durch ein mittels Korrelationberechnung erzeugtes Rückkopplungssignal gesteuert wird. Auf einem als optischer Wellenleiter symbolisierten Weg 30 gelangt ein durch die Störungsfunktion H (omega) gestörtes optisches Signal zu einem Eingang eines Kompensators 32, der in der Lage ist, mittels einer inversen Funktion H-¹ (omega) eine Kompensation der Störungen auf dem optischen Übertragungsweg vorzunehmen. Der Kompensator 32 wird von einem Rückkopplungssignal gesteuert, dass einem Eingang 34 des Kompensators zugeführt wird. Dieses Rückkopplungssignal ist das oben anhand der Figur 1 erläuterte Ausgangssignal der Korrelationsvorrichtung (analoger Multiplizierer mit nachgeschaltetem Integrator), die hier mit dem Bezugszeichen 36 versehen ist.

Im Beispiel wird davon ausgegangen, dass die wesentlichste Ursache der Störungen in der Polarisations-Moden-Dispersion liegt. Demzufolge weist der Kompensator 32 folgende Elemente auf: er besteht im wesentlichen aus einem Polarisationscontroller und einer polarisations-erhaltenden Faser (PMF). Ein solcher Kompensator ist bereits bekannt, allerdings nicht im Zusammenhang mit der Speisung durch ein Rückkopplungssignal, das durch Korrelationsberechnung ermittelt wird.

Das am Ausgang des Kompensators erscheinende kompensierte optische Signal wird mittels eines als Photodiode symbolisierten opto-elektrischen Wandlers 38 in ein elektrisches Signal umgesetzt und mittels einer Schwellenwertschaltung 40 demoduliert. Am Ausgang 42 der Schwellenwertschaltung 40 erscheint das demodulierte Signal, das je nach Bedarf nun erneut auf einen optischen Übertragungsweg gebracht wird oder einer weiteren Verarbeitung zugeführt wird. Das Signal zwischen den Elementen 32 und 38 wird einem Eingang 35 eines Korrelators 36 zugeführt. Einem weiteren Eingang 37 wird im Beispiel dasselbe Signal wie dem Eingang 35 zugeführt, bei einer anderen Ausführungsform etwas zeitverzögert, wie oben erläutert. Es ist noch ein elektrischer Kompensator 50 zum Kompensieren von Störungen mittels des durch Korrelation gewonnenen Rückkopplungssignals angedeutet, der bei einer ersten Modifikation der bisher beschriebenen Fig. 2 zusätzlich zur Einrichtung 32 vorhanden ist, bei einer zweiten Modifikation statt der Einrichtung 32. Dabei ist in den beiden zuletzt genannten Fällen der elektrische Kompensator 50 bei Ausführungsbeispielen mit der die Elemente 38 und 40 verbindenden Leitung über eine Leitung verbunden, bei anderen Ausführungsbeispielen ist der elektrische Kompensator 50 in die die Elemente 38 und 40 verbindende Leitung eingefügt.

Es wird noch auf Folgendes hingewiesen: Es ist bekannt, weitgehend gleiche Signale mit unbekannter Phasenverschiebung auf Korrelation zu prüfen und dabei die Phasenverschiebung so zu verändern, bis eine maximale Korrelation (= maximale zeitliche Übereinstimmung) der beiden Signale erreicht ist, woraufhin diese zum Beispiel besonders wirkungsvoll detektiert werden können. Dieses bekannte Vorgehen weicht vom Vorgehen gemäß der erfindungsgemäßen Vorrichtung bzw. dem erfindungsgemäßen Verfahren ab. Die Erfindung ist nämlich so anwendbar und wird vorzugsweise so angewendet, dass nach dem Einstellen einer Zeitverzögerung zwischen zwei in der oben beschriebenen Weise einer Korrelationsberechnung zu unterziehenden Signalen diese zeitliche Verzögerung nicht zum Zweck einer Veränderung der Korrelation geändert wird.

## Patentansprüche

1. Empfangseinrichtung für ein optisches Signal, das durch Störungen beeinträchtigt ist,
wobei die Empfangseinrichtung eine adaptive Filtereinrichtung (32) aufweist, die dazu dient, Störungen des optischen Signals mindestens teilweise zu kompensieren, und die durch ein Rückkopplungssignal gesteuert wird,
wobei das Rückkopplungssignal durch Korrelieren des optischen Signals mit einem weiteren Signal erzeugt wird, das bezüglich des optischen Signals so ausgebildet ist, dass bei Nichtvorhandensein von Störungen des optischen Signals eine im Vergleich zur maximal möglichen Korrelation beider Signale kleinere Korrelation vorhanden ist,
**gekennzeichnet durch**
einen analogen Multiplizierer (7), in dem zum Korrelieren das optische Signal mit dem weiteren Signal multipliziert wird, und
einer Integrationseinrichtung (10), die das Multipliziererausgangssignal integriert und ausgangsseitig eine Gleichspannung abgibt, die ein Maß für den Korrelationsfaktor ist.

2. Empfangseinrichtung nach Anspruch 1, **dadurch gekennzeichnet, dass** bei Nichtvorhandensein von Störungen des optischen Signals die vorhandene Korrelation höchstens im Bereich von 50 % der maximal möglichen Korrelation beider Signale liegt.

3. Empfangseinrichtung nach Anspruch 1, **dadurch gekennzeichnet, dass** bei Nichtvorhandensein von Störungen des optischen Signals höchstens eine geringfügige Korrelation vorhanden ist.

4. Empfangseinrichtung nach Anspruch 1 **dadurch gekennzeichnet, dass** das weitere Signal eine zeitlich verschobenen Kopie des optischen Signals ist.

5. Empfangseinrichtung nach Anspruch 1, **dadurch gekennzeichnet, dass** das weitere Signal aus einem in der Empfangseinrichtung zur Verfügung stehenden, mit dem genannten optischen Signal in keinerlei Zusammenhang stehenden optischen Signal gebildet wird.

6. Empfangseinrichtung nach Anspruch 1, **dadurch gekennzeichnet, dass** das weitere Signal ein am Ort der Empfangseinrichtung erzeugtes künstliches Signal ist.

7. Empfangseinrichtung nach Anspruch 1, **dadurch gekennzeichnet, dass** die adaptive Filtereinrichtung derart ausgebildet ist, dass die Korrelation im Sinne einer Maximierung beeinflusst wird.

8. Empfangseinrichtung nach Anspruch 1, **dadurch gekennzeichnet, dass** die adaptive Filtereinrichtung derart ausgebildet ist, dass die Korrelation im Sinne einer Minimierung beeinflusst wird.

9. Verfahren zum Erzeugen eines Rückkopplungssignals, das zum Steuern einer adaptiven Filtereinrichtung zwecks Kompensation von Störungen eines optischen Signals geeignet ist, wobei das Rückkopplungssignal durch Korrelieren des optischen Signals mit einem weiteren Signal erzeugt wird, das bezüglich des optischen Signals so ausgebildet ist, dass bei Nichtvorhandensein von Störungen des optischen Signals eine im Vergleich zur maximal möglichen Korrelation beider Signale kleinere Korrelation vorhanden ist, **dadurch gekennzeichnet, dass** zum Korrelieren das optische Signal mit dem weiteren Signal analog multipliziert und über das so erhaltene Signal integriert wird.

10. Verfahren nach Anspruch 9, **dadurch gekennzeichnet, dass** das Rückkopplungssignal durch Korrelieren des optischen Signals mit einem weiteren Signal erzeugt wird, das bezüglich des optischen Signals so ausgebildet ist, dass bei Nichtvorhandensein von Störungen des optischen Signals höchstens eine geringfügige Korrelation vorhanden ist.

## Claims

1. Receiving device for an optical signal impaired by disturbances,
the receiving device having an adaptive filter device (32) which serves to compensate at least partially disturbances of the optical signal, and which is controlled through a feedback signal,
the feedback signal being generated by correlating the optical signal with a further signal, which is so constituted relative to the optical signal that, in the absence of disturbances of the optical signal, there is present a lesser correlation as compared to the maximum possible correlation of both signals,
**characterized by**
an analog multiplier (7) in which, for the purpose of correlation, the optical signal is multiplied by the further signal, and
an integration device (10), which integrates the multiplier output signal and, on the output side, provides a d.c. voltage which is a measure of the correlation factor.

2. Receiving device according to claim 1, **characterized in that**, in the absence of disturbances of the optical signal, the correlation that is present is at most in the region of 50 % of the maximum possible correlation of both signals.

3. Receiving device according to claim 1, **characterized in that**, in the absence of disturbances of the optical signal, at most a slight correlation is present.

4. Receiving device according to claim 1, **characterized in that** the further signal is a time-displaced copy of the optical signal.

5. Receiving device according to claim 1, **characterized in that** the further signal is formed from an optical signal which is available in the receiving device and which bears no relationship whatsoever to the said optical signal.

6. Receiving device according to claim 1, **characterized in that** the further signal is an artificial signal generated at the location of the receiving device.

7. Receiving device according to claim 1, **characterized in that** the adaptive filter device is of such design that the correlation is influenced towards a maximization.

8. Receiving device according to claim 1, **characterized in that** the adaptive filter device is of such design that the correlation is influenced towards a minimization.

9. Method for generating a feedback signal which is suitable for controlling an adaptive filter device for the purpose of compensating disturbances of an optical signal, the feedback signal being generated by correlating the optical signal with a further signal, which is so constituted relative to the optical signal that, in the absence of disturbances of the optical signal, there is present a lesser correlation as compared to the maximum possible correlation of both signals, **characterized in that**, for the purpose of correlation, the optical signal is multiplied by the further signal in an analog manner and integrated using the thus obtained signal.

10. Method according to claim 9, **characterized in that** the feedback signal is generated by correlating the optical signal with a further signal, which is so constituted relative to the optical signal that, in the absence of disturbances of the optical signal, at most a slight correlation is present.

## Revendications

1. Dispositif de réception pour un signal optique, qui est altéré par des perturbations, le dispositif de réception présentant un dispositif de filtre (32) adaptatif, qui sert à compenser au moins partiellement des perturbations du signal optique, et qui est commandé par un signal de rétroaction, le signal de rétroaction étant généré par corrélation du signal optique avec un autre signal qui est réalisé en ce qui concerne le signal optique de telle sorte que, en l'absence de perturbations du signal optique, on a une corrélation plus petite par rapport à la corrélation maximale possible des deux signaux, **caractérisé par** un multiplicateur (7) analogique, dans lequel le signal optique est multiplié par l'autre signal pour la corrélation, et un dispositif d'intégration (10), qui intègre le signal de sortie de multiplicateur et fournit une tension continue côte sortie, qui est un critère pour le facteur de corrélation.

2. Dispositif de réception selon la revendication 1, **caractérisé en ce que**, en l'absence de perturbations du signal optique, la corrélation présente se situe au maximum dans la plage de 50 % de la corrélation maximale possible des deux signaux.

3. Dispositif de réception selon la revendication 1, **caractérisé en ce que**, en l'absence de perturbations du signal optique, on a au maximum une légère corrélation.

4. Dispositif de réception selon la revendication 1, **caractérisé en ce que** l'autre signal est une copie décalée dans le temps du signal optique.

5. Dispositif de réception selon la revendication 1, **caractérisé en ce que** l'autre signal est formé d'un signal optique mis à disposition dans le dispositif de réception et sans aucun rapport avec le signal optique mentionné.

6. Dispositif de réception selon la revendication 1, **caractérisé en ce que** l'autre signal est un signal artificiel généré à l'emplacement du dispositif de réception.

7. Dispositif de réception selon la revendication 1, **caractérisé en ce que** le dispositif de filtre adaptatif est conçu de telle sorte que la corrélation est influencée dans le sens d'une maximisation.

8. Dispositif de réception selon la revendication 1, **caractérisé en ce que** le filtre adaptatif est conçu de telle sorte que la corrélation est influencée dans le sens d'une minimisation.

9. Procédé pour générer un signal de rétroaction, qui convient pour la commande d'un dispositif de filtre adaptatif pour la compensation de perturbations d'un signal optique, le signal de rétroaction étant généré par la corrélation du signal optique avec un autre signal, qui est conçu en ce qui concerne le signal optique de telle sorte que, en l'absence de perturbations du signal optique, on a une corrélation plus petite par rapport à la corrélation maximale possible des deux signaux, **caractérisé en ce que**, pour la corrélation, le signal optique est multiplié de façon analogue avec l'autre signal et est intégré par le signal ainsi obtenu.

10. Procédé selon la revendication 9, **caractérisé en ce que** le signal de rétroaction est généré par la corrélation du signal optique avec un autre signal qui est conçu en ce qui concerne le signal optique de telle sorte que, en l'absence de perturbations du signal optique, on a au maximum une légère corrélation.
